# EUROPEAN PATENT APPLICATION

(11) **EP 4 738 643 A1**
(43) Date of publication of application: **06.05.2026**
(21) Application number: 25212338.5
(22) Date of filing: 30.10.2025
(51) Int. Cl.: H02J 7/36, H02J 7/50, H02J 7/90

(54) **CHARGE AND DISCHARGE CONTROL SYSTEM FOR A ZINC-AIR BATTERY**

(30) Priority: 01.11.2024 US 202463715308 P
(71) Applicant: E-Zinc Inc., Mississauga, ON L5T 2A4 (CA)
(72) Inventor: ALEXANDER, Ryan Warren, Toronto, M9R 2J9 (CA); LUU, Devin K., Toronto, M5V 3P5 (CA); DE KONING, Petrus Theodorus, Toronto, M4V 1B9 (CA); NADEN, Mark, Tempe, AZ 85281 (CA); ZHANG, Xiaoge Gregory, Mississauga, L5T 2A4 (CA)
(74) Representative: ZBM Patents - Zea, Barlocci & Markvardsen

(57) **Abstract**

A system including a plurality of electrochemical cells, charge switching circuitry, and discharge switching circuitry. The charge switching circuitry and the discharge switching circuitry may be controlled to substantially isolate charging and discharging of the plurality of cells.

## Description

### FIELD OF INVENTION

The present disclosure relates to the field of zinc-air batteries, and more particularly to a charge and discharge configuration for a zinc-air battery.

### BACKGROUND

The zinc-air battery technology has been known for over 100 years but has yet to be successfully commercialized. In a conventional charge cycle, an electrolyte comprising zinc hydroxide releases zinc metal in a charge section, which precipitates as a solid and accumulates in a discharge section. During discharge, the solid zinc metal is converted back to zinc hydroxide, liberating electrons in the process. The charging and discharge modes of operation for zinc-air batteries are operable via separate terminals, which is a deterrent against use of charging and discharging platforms that are commercially available for other battery technologies.

### SUMMARY

In general, one innovative aspect of the subject matter described herein can be embodied in an electrochemical cell system. The system may include first and second cells each with a negative charge terminal and a positive charge terminal and a negative discharge terminal and a positive discharge terminal. The electrochemical cell system may be adapted to discharge power to a current sink and to charge based on power from a current source and may include first discharge switching circuitry operably coupled to the positive discharge terminal of the first cell. The first discharge switching circuitry may be operable to selectively provide current to the current sink from the first cell. The electrochemical cell system may include second discharge switching circuitry operably coupled to the positive discharge terminal of the second cell and the negative discharge terminal of the first cell. The second discharge switching circuitry may be operable to selectively provide current to the current sink from the second cell. The electrochemical cell system may include a controller configured to direct the operation of the first and second discharge circuitry to substantially isolate charging and discharging of the first and second cells. For instance, the first and second discharge circuitry may prevent simultaneous charging and discharging of the first and second cells.

The foregoing and other embodiments can each optionally include one or more of the following features, alone or in combination. In particular, one embodiment includes all the following features in combination.

In some embodiments, the electrochemical cell system may include first charge switching circuitry operably coupled to the positive charge terminal of the first cell. The first charge switching circuitry may be operable to selectively provide current output from the current source to the positive charge terminal of the first cell. The electrochemical cell system may include second charge switching circuitry operably coupled to the positive charge terminal of the second cell. The second charge switching circuitry may be operable to selectively provide the current output from the current source to the positive charge terminal of the second cell, where the second charge switching circuitry may receive the current output from the current source via at least one of the first cell and the first charge switching circuitry.

In some embodiments, receipt of current output from the first cell in the second charge switching circuitry may include receiving the current output from the current source via the negative charge terminal of the first cell, and where receipt of current output from the first charge switching circuitry may include receiving the current output from the current source via at least one of a direct connection to the first charge switching circuitry and an indirect connection to the first charge switching circuitry at the positive charge terminal of the first cell.

In some embodiments, at least one of the first charge switching circuitry and the second charge switching circuitry may be operable to selectively bypass current flow into the positive charge terminal of the first cell to provide current from the current source to the second charge switching circuitry.

In some embodiments, the first charge switching circuitry may selectively bypass current flow into the positive charge terminal of the first cell by directing current to a node of the first cell that is connected to the negative charge terminal of the first cell and the second charge switching circuitry.

In some embodiments, the second charge switching circuitry may selectively bypass current flow into the positive charge terminal of the first cell by disconnecting from the negative charge terminal of the first cell and connecting to the positive charge terminal of the first cell.

In some embodiments, the controller may be operable to selectively discharge power from one or both of the first and second cells, and where the controller may be operable to selectively charge one or both of the first and second cells.

In some embodiments, the controller may be operable to control whether one or both of the first and second cells is being discharged by selectively bypassing the first and second cells via the operation of the first and second discharge switching circuitry.

In some embodiments, the controller may be operable to control whether one or both of the first and second cells is being charged by selectively bypassing the first and second cells via the operation of the first and second charge switching circuitry.

In some embodiments, the first discharge switching circuitry may be operable to selectively provide current to the current sink from the first cell via the positive discharge terminal of the first cell, and where the second discharge switching circuitry may be operable to selectively provide current to the current sink from the second cell via the positive discharge terminal of the second cell.

In some embodiments, the current sink may be a boost converter operable to convert power from the electrochemical system to power an external load.

In some embodiments, the current source may be a buck converter operable to convert external power for charging the electrochemical system.

In some embodiments, the first discharge switching circuitry may be operable to selectively bypass current flow from the positive discharge terminal of the first cell by coupling the negative discharge terminal of the first cell to the current sink instead of the positive discharge terminal of the first cell.

In some embodiments, the second discharge switching circuitry may be operable to selectively bypass current flow from the positive discharge terminal of the first cell by disconnecting the negative discharge terminal of the first cell.

In some embodiments, the first charge switching circuitry may include a first single-sided MOSFET with a first body diode configured to substantially block current flow from the positive charge terminal of the second cell to the negative charge terminal of the first cell.

In some embodiments, a sensor is coupled to the first single sided MOSFET to provide an output that confirms the single sided MOSFET is operational to avoid conduction through the first body diode while charging the first cell.

In some embodiments, the construction of the first and second cells substantially limits current flow through the first body diode from the negative charge terminal of the first cell to the positive charge terminal of the second cell.

In some embodiments, the first charge switching circuitry may include a second single sided MOSFET configured to selectively bypass charging of the first cell.

In some embodiments, the first charge switching circuitry may include a first double sided MOSFET operable to selectively control charging of the first cell.

In general, one innovative aspect of the subject matter described herein can be embodied in a switching circuitry for an electrochemical cell system including first and second cells, the first and second cells each including a negative charge terminal and a positive charge terminal and a negative discharge terminal and a positive discharge terminal. The electrochemical cell system may be adapted to discharge power to a current sink and to charge based on power from a current source. The switching circuitry may include a first MOSFET including a first body diode, where the first MOSFET may be connected between the negative charge terminal of the first cell and the positive charge terminal of the second cell. The first MOSFET may be operable to selectively control charging of the first cell based on power from the current source, and the first body diode of the first MOSFET may be configured to substantially block current flow from the positive charge terminal of the second cell to the negative charge terminal of the first cell. The switching circuitry may include a second MOSFET connected between the positive charge terminal of the first cell and the positive charge terminal of the second cell. The second MOSFET may be operable to selectively bypass charging of the first cell.

The foregoing and other embodiments can each optionally include one or more of the following features, alone or in combination. In particular, one embodiment includes all the following features in combination.

In some embodiments, a sensor may be coupled to the first single sided MOSFET to provide an output that confirms the single sided MOSFET is operational to avoid conduction through the first body diode while charging the first cell.

In some embodiments, the construction of the first and second cells may substantially limit current flow through the first body diode from the negative charge terminal of the first cell to the positive charge terminal of the second cell.

In some embodiments, at least one fuse is included in the electrochemical cell system, where the at least one fuse is configured to be able to isolate at least one of the electrochemical cells from other electrochemical cells in the system.

Before the embodiments of the invention are explained in detail, it is to be understood that the invention is not limited to the details of operation or to the details of construction and the arrangement of the components set forth in the following description or illustrated in the drawings. The invention may be implemented in various other embodiments and of being practiced or being carried out in alternative ways not expressly disclosed herein. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Further, enumeration may be used in the description of various embodiments. Unless otherwise expressly stated, the use of enumeration should not be construed as limiting the invention to any specific order or number of components. Nor should the use of enumeration be construed as excluding from the scope of the invention any additional steps or components that might be combined with or into the enumerated steps or components. Any reference to claim elements as "at least one of X, Y and Z" is meant to include any one of X, Y or Z individually, and any combination of X, Y and Z, for example, X, Y, Z; X, Y; X, Z; and Y, Z.

### BRIEF DESCRIPTION OF THE DRAWINGS

Fig. 1 shows an electrochemical cell system according to one embodiment.
Fig. 2 shows an electrochemical cell system according to another embodiment.
Fig. 3 shows an electrochemical cell system according to yet another embodiment.
Fig. 4 shows a switching circuit according to one embodiment.
Fig. 5 shows a switching circuit according to one embodiment.
Fig. 6 shows a method of operation according to one embodiment.
Fig. 7 shows an electrochemical cell in an electrochemical cell system including a fuse.

### DETAILED DESCRIPTION

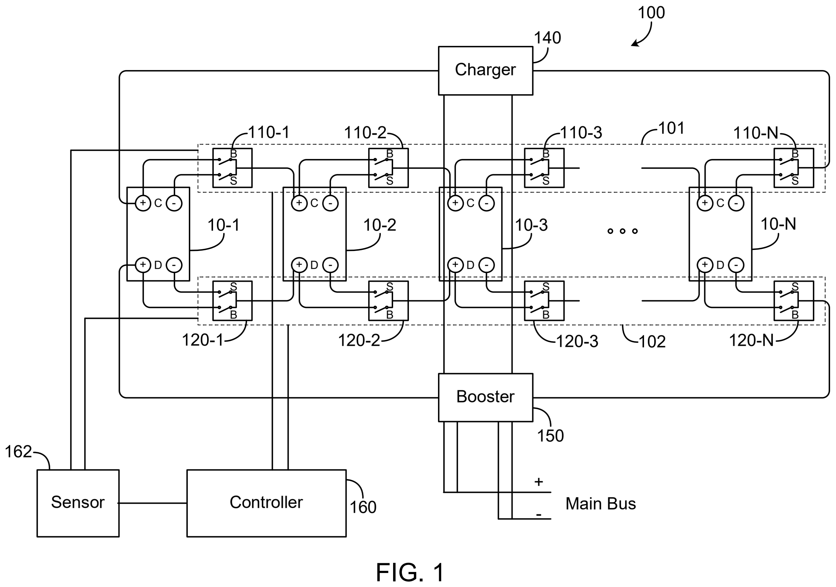

An electrochemical cell system according to one embodiment is shown in Fig. 1 and generally designated 100. The electrochemical cell system 100 in the illustrated embodiment includes a plurality of cells 10-1, 10-2, 10-3 . . . 10-N, charge switching circuitry 101, and discharge switching circuitry 102. The charge switching circuitry 101 and the discharge switching circuitry 102 may be operably coupled to a controller 160, which may direct operation of the charged switching circuitry 101 and the discharge switching circuitry 102 according to one or more aspects described herein. For instance, the controller 160 may direct operation of the charge switching circuitry 101 and the discharge switching circuitry 102 such that simultaneous charging and discharging of the plurality of cells 10-1, 10-2, 10-3 . . . 10-N is prevented. In a charging mode with the charge switching circuitry 101 active to charge the plurality of cells 10-1, 10-2, 10-3 . . . 10-N, the plurality of cells 10-1, 10-2, 10-3 . . . 10-N may form a charge string. In a discharging mode with the discharge switching circuitry 102 active to discharge the plurality of cells 10-1, 10-2, 10-3 . . . 10-N, the plurality of cells 10-1, 10-2, 10-3 . . . 10-N may form a discharge string.

As described herein, the electrochemical cell system 100 may include zinc-air cells, or possibly other types of metal-air cells, four terminals that can either be connected to form a charge string or a discharge string but not both a charge string and a discharge string at the same time. Battery systems may have imperfect reliability and without cell fault tolerance, a single cell failure can take the entire system offline. Additionally, cells within a string are not perfectly equal in performance and capacity and fall out of state-of-charge balance over time. The cells 10-1, 10-2, 10-3 . . . 10-N of the electrochemical cell system 100 may have a greater impedance / voltage asymmetry than other conventional cell types, such as Li-ion or lead-acid, limiting the suitability of off-the-shelf charger/inverters in voltage and current ranges. Due to limitations with zinc wiping during charging, a zinc-air based cell may need to be charged above a lower charge current limit. The charge switching circuitry 101 and the controller 160 according to one embodiment may be operable to comply with these limitations of metal-air based cells, such as zinc-air based cells.

In the illustrated embodiment, the plurality of cells 10-1, 10-2, 10-3 ... 10-N each includes 1) a positive charge terminal and a positive discharge terminal that are separate from each other and 2) a negative charge terminal and a negative discharge terminal that are separate from each other. In one aspect, the charge switching circuitry 101 may be operably coupled to the positive charge terminal and the negative charge terminal of the plurality of cells 10-1, 10-2, 10-3 . . . 10-N to selectively control charging of one or more of the plurality of cells 10-1, 10-2, 10-3 . . . 10-N, while the discharge switching circuitry 102 may be operatively coupled to the negative charge terminal and the negative discharge terminal of the plurality of cells 10-1, 10-2, 10-3 . .. 10-N to selectively control discharging of one or more of the plurality of cells 10-1, 10-2, 10-3 . . . 10-N. In other words, the charge and discharge sections of the plurality of cells 10-1, 10-2, 10-3 . . . 10-N may be physically separated with each section having a positive and negative terminal; thus, the zinc-air battery may use cells with four terminals. It is noted that an unwanted side reaction of one or more cells may be possible if the discharge and charge sections are connected at the same time, potentially damaging one or more cells.

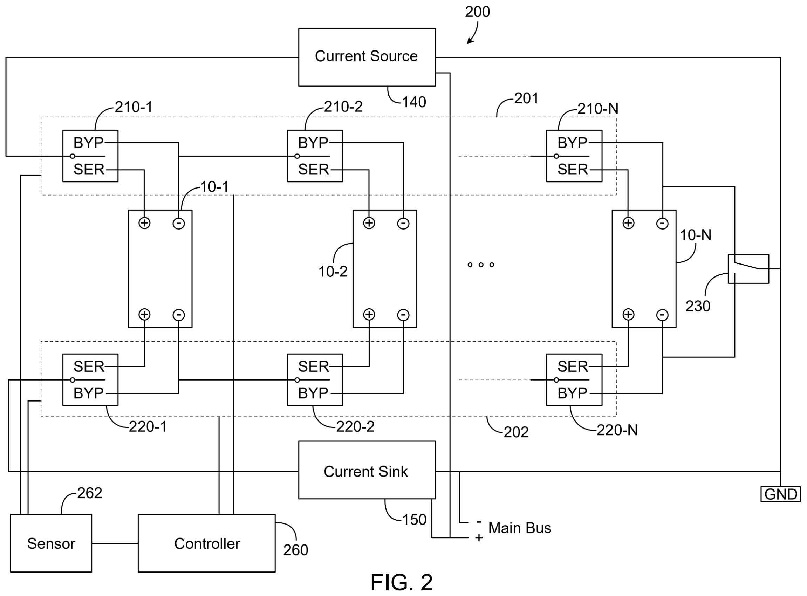

In one embodiment, a string of four terminal cells 10-1, 10-2, 10-3 ... 10-N with the aforementioned terminal connection constraints may be presented as a two terminal battery to an external inverter, charger, or solar charger. In one embodiment, the controller 160 of the electrochemical cell system 100 (e.g., a string controller) may coordinate the charge switching circuitry 101 and the discharge switching circuitry 102 (e.g., a plurality of solid-state switches (SSS) on each set of charge and discharge terminals of each cell) relative to a current sink 150 and a current source 140 (either of which may be DC/DC converters) on each charge and discharge string of cells. Solid-state switches may enable faster switching times over mechanical counterparts, allowing use cases such as uninterruptable power source (UPS) applications. It is to be understood, as described herein, that the switches provided in the charge switching circuitry 101 and the discharge switching circuitry 102 are not limited to solid-state switches-any type of switch may be used. Further, there are a variety of types of solid-state switches that may be used in solid-state switch configurations so that the present disclosure is not limited to any one type of solid-state switch. Yet further, any combination of different types of switches may be utilized (e.g., so that multiple types of switches may be provided in the charge switching circuitry 101 and/or the discharge switching circuitry 102.) Optionally, in configurations where the output of the current source 140 and the input of the current sink 150 are not isolated, the controller 160 may direct operation of another switch (e.g., an SSS) at the end of the charge and discharge strings to isolate charge and discharge ground returns, as shown in Fig. 2 and referenced as selector switch 230. The electrochemical cell system 100 may allow each of the charge and discharge string of cells 10-1, 10-2, 10-3 . . . 10-N to operate at a voltage range and terminal configuration compatible with off-the-shelf power conversion equipment.

The plurality of cells 10-1, 10-2, 10-3 . . . 10-N in the illustrated embodiment may each correspond to an electrochemical cell that together provide an electrochemical system in the form of a zinc-air battery. Discharge of a cell 10-1, 10-2, 10-3 . . . 10-N may involve a reaction with oxygen in air to form ions that migrate into a zinc past and form zincate, releasing electrons that provide current for supply to a load. Charging of a cell 10-1, 10-2, 10-3 . . . 10-N may involve precipitation of zinc to liberate oxygen from the discharge reaction products. It is to be understood that the plurality of cells 10-1, 10-2, 10-3 . . . 10-N, as well as the charge and/or discharge modes for the cells 10-1, 10-2, 10-3 . . . 10-N, may vary from application to application and that the present disclosure is not limited to any particular construction or mode of charging and discharging of a cell 10-1, 10-2, 10-3 . . . 10-N.

In the illustrated embodiment of Fig. 1, the plurality of cells 10-1, 10-2, 10-3 . . . 10-N may be coupled to a current source 140, such as a charger (e.g., a buck converter), operable to supply current to the plurality of cells 10-1, 10-2, 10-3 . . . 10-N, or a subset thereof, for charging according to the state of the charge switching circuitry 101. The plurality of cells 10-1, 10-2, 10-3 . . . 10-N may also be coupled to a current sink 150, such as a booster (e.g., a boost converter), operable to receive current from the plurality of cells 10-1, 10-2, 10-3 . . . 10-N, or a subset thereof, for discharging according to the state of the discharge switching circuitry 102.

The current source 140 may be a charge buck converter configured to allow up to a target current, configured by the controller 160, to flow into the charge string without dropping a main bus (e.g., a DC bus) below a set threshold (e.g., 52.5V) by reducing the charge current to 0A as the main bus approaches the threshold.

The current sink 150 may be a discharge boost converter configured to amplify the voltage of the discharge string of cells 10-1, 10-2, 10-3 . . . 10-N to a target voltage at the main bus (e.g., 47V, 48VDC, 60VDC, 72VDC, 96VDC, and 120VDC) and may be enabled by the controller 160 as long as sufficient discharge string voltage is present.

The charge switching circuitry 101 according to one embodiment may include a plurality of switching circuits 110-1, 110-2, 110-3 . . . 110-N. The switching circuits 110-1, 110-2, 110-3 . . . 110-N may be selectively controlled by the controller 160 to selectively charge one or more of the plurality of cells 10-1, 10-2, 10-3 . . . 10-N. In one embodiment, charging of the cells 10-1, 10-2, 10-3 . . . 10-N can be conducted according to a characteristic of each of the cells 10-1, 10-2, 10-3 . . . 10-N, such as a state of charge of a cell 10-1, 10-2, 10-3 . . . 10-N. For instance, done or more of the cells 10-1, 10-2, 10-3 . . . 10-N may be selectively bypassed relative to charging current provided from the current source 140 based on the characteristic.

The switching circuits 110-1, 110-2, 110-3 . . . 110-N may each include one or more switches in the form of solid state switches (e.g., MOSFETs). The switches of the switching circuits 110-1, 110-2, 110-3 . . . 110-N may be operated according to directives from the controller 160. Additionally, or alternatively, the switching circuits 110-1, 110-2, 110-3 . . . 110-N may include internal circuitry capable of selectively activating a bypass mode based on a characteristic of the cells 10-1, 10-2, 10-3 . . . 10N that can be sensed by the internal circuitry. Additionally, or alternatively, the switching circuits 110-1, 110-2, 110-3 . . . 110-N may receive a directive from circuitry other than the controller 160, such as a cell management board (CMB) described herein and associated with a cell 10-1, 10-2, 10-3 . . . 10N, to selectively activate a bypass mode based on a characteristic of the cells 10-1, 10-2, 10-3 . . . 10N. For instance, the cell, itself, may include sensor circuitry operable to direct the switching circuit to activate a bypass mode.

Bypass of a cell 10-1, 10-2, 10-3 ... 10-N for charging may be achieved in a variety of ways. In the illustrated embodiment of Fig. 1, the cell 10-1 may be selectively bypassed by the switch 110-1, which may be operably coupled to the positive charge terminal of the cell 10-1 and the negative charge terminal of the cell 10-1. The switching circuit 110-1 may be selectively controlled to direct current from the current source 140 through the cell 10-1 or so that such current bypasses the cell 10-1. To direct current from the current source 140 through the cell 110-1, the switching circuit 110-1 may be controlled to provide a current path for the current from the current source 140 to flow from the positive charge terminal to the negative charge terminal. To bypass the cell 10-1, the switching circuit 110-1 may be controlled so that another current path is provided for current to flow with a substantially lower potential for current. For instance, a selectable bypass switch of the switching circuit 110-1 may be activated to provide a current path between the positive charge terminal of the cell 10-1 and a downstream connection, such as the positive terminal of the second cell 10-2 or the current source 140. To provide current between the positive charge terminal and the negative charge terminal of the cell 10-1, a selective charge switch of the switching circuit 110-1 may be activated, while the selectable bypass switch is deactivated, to provide a current path from the positive charge terminal to the negative charge terminal and then to the downstream connection, such as the positive charge terminal of the cell 10-2 or the current source 140. Charge and charge bypass modes for each of the plurality of cells 10-1, 10-2, 10-3 . . . 10-N may be selectively controlled by the charge switching circuitry 101 in a similar manner, with a respective switching circuit 110-1, 110-2, 110-3 . . . 110-N being controllable to selectively charge or bypass an associated cell 10-1, 10-2, 10-3 . . . 10-N.

A sensor system 162 may be provided in the electrochemical cell system 100 that is coupled to the one or more components thereof, such as the charge switching circuitry 101, and operable to provide sensor output indicative of a characteristic (or characteristics) pertaining to each of the plurality of cells 10-1, 10-2, 10-3 . . . 10-N. For instance, the characteristic may correspond to a voltage and/or a state of charge of a particular cell among the plurality of cells 10-1, 10-2, 10-3 . . . 10-N. The sensor system 162 may obtain such sensor output for each of the plurality of cells 10-1, 10-2, 10-3 . . . 10-N, and provide this sensor output to the controller 160 which may in turn, based on the senor output, selectively determine which of the plurality of cells 10-1, 10-2, 10-3 . . . 10-N to charge with current from the current source 140. The sensor system 162 may include a plurality of sensors separately associated with each of the plurality of cells 10-1, 10-2, 10-3 . . . 10-N-e.g., the sensor system 162 may include sensor aspects of the CMBs described herein.

Additionally, or alternative to being coupled to one or more components of the charge switching circuitry 101, the sensor system 162 may optionally be coupled to the discharge switching circuit 102 and operable to provide sensor output indicative of a characteristic (or characteristics) pertaining to each of the plurality of cells 10-1, 10-2, 10-3 . . . 10-N. For example, the characteristic may correspond to a state of charge of a cell among the plurality of cells 10-1, 10-2, 10-3 . . . 10-N. The controller 160 may obtain such sensor output from the sensor system 162, and selectively determine which of the plurality of cells 10-1, 10-2, 10-3 . . . 10-N to discharge for supply of current to the current sink 150.

The discharge switching circuitry 102 in one embodiment may include a plurality of switching circuits 120-1, 120-2, 120-3 . . . 120-N. The switching circuits 120-1, 120-2, 120-3 . . . 120-N may be selectively controlled by the controller 160 to selectively discharge one or more of the plurality of cells 10-1, 10-2, 10-3 . . . 10-N. In one embodiment, discharging of the cells 10-1, 10-2, 10-3 . . . 10-N can be conducted according to a characteristic of each of the cells 10-1, 10-2, 10-3 . . . 10-N, such as a state of charge of a cell 10-1, 10-2, 10-3 . . . 10-N. For instance, one or more of the cells 10-1, 10-2, 10-3 . . . 10-N may be selectively bypassed relative to discharging current provided toward the current sink 150 based on the characteristic (e.g., state of charge or voltage). Similar to control over the plurality of switching circuits 110-1, 110-2, 110-3 . . . 110-N of the charge switching circuitry 101, the controller may direct operation of the plurality of switching circuits 120-1, 120-2, 120-3 . . . 120-N of the discharge switching circuitry 102 based on sensor output from the sensor system 162, such as a state of charge.

Bypass of a cell 10-1, 10-2, 10-3 . . . 10-N for discharging may be achieved in a variety of ways. In the illustrated embodiment of Fig. 1, the cell 10-1 may be selectively bypassed by the switching circuit 120-1, which may be operably coupled to the positive discharge terminal of the cell 10-1 and the negative discharge terminal of the cell 10-1. The switching circuit 120-1 may be selectively controlled to direct current from the cell 10-1 to the current sink 150 or so that a current path between the positive and negative discharge terminals is effectively bypassed for the cell 10-1. To direct current to the current sink 150 from the cell 10-1, the switching circuit 120-1 may be controlled to provide a current path for current generated from the cell 10-1 relative to the positive and negative discharge terminals for supply to the current sink 150. To bypass the cell 10-1, the switching circuit 120-1 may be controlled so that another current path is provided for current to flow with a substantially lower potential for current. For instance, a selectable bypass switch of the switching circuit 120-1 may be activated to provide a current path between the positive discharge terminal of the cell 10-1 and an upstream connection, such as the positive terminal of the second cell 10-2 or the current sink 150. To provide current between the positive charge terminal and the negative charge terminal of the cell 10-1, a selective discharge switch of the switching circuit 120-1 may be activated, while the selectable bypass switch is deactivated, to provide a current discharge path between the positive discharge terminal to the negative discharge terminal and then to a downstream connection, such as another switching circuit 120 or the current sink 150. Discharge and discharge bypass modes for each of the plurality of cells 10-1, 10-2, 10-3 . . . 10-N may be selectively controlled by the discharge switching circuitry 101 in a similar manner, with a respective switching circuit 120-1, 120-2, 120-3 . . . 120-N being controllable to selectively discharge or bypass an associated cell 10-1, 10-2, 10-3 . . . 10-N.

The controller 160 may include electrical circuitry and components to carry out the functions and algorithms described herein. Generally speaking, the controller 160 may include one or more microcontrollers, microprocessors, digital signal processors (DSP), and/or other programmable electronics that are programmed to carry out the functions described herein. The controller 160 may additionally or alternatively include other electronic components that are programmed to carry out the functions described herein, or that support the microcontrollers, microprocessors, and/or other electronics. The other electronic components include, but are not limited to, one or more field programmable gate arrays (FPGAs), systems on a chip, volatile or nonvolatile memory, discrete circuitry, integrated circuits, application specific integrated circuits (ASICs) and/or other hardware, software, or firmware. Such components can be physically configured in any suitable manner, such as by mounting them to one or more circuit boards, or arranging them in other manners, whether combined into a single unit or distributed across multiple units. Such components may be physically distributed in different positions in the system or aspects thereof, or they may reside in a common location within the system or an aspect thereof. When physically distributed, the components may communicate using any suitable serial or parallel communication protocol, such as, but not limited to, CAN, LIN, Vehicle Area Network (VAN), FireWire, I2C, RS-232, RS-485, Ethernet, LAN, WiFi, and Universal Serial Bus (USB).

The controller 160 may direct the charge switching circuitry 101 and the discharge switching circuitry 102, and optionally a switch similar to the selector switch 230 in Fig. 2, to provide at least three additional functions in the electrochemical cell system 100: 1) they may enable cells 10-1, 10-2, 10-3 . . . 10-N to be selectively bypassed in charge or discharge or both to provide cell fault tolerance to the string; 2) they may allow string current to be adjusted for a given current output from the current source 140 (e.g., charger output power); and 3) they may enable trim balancing of the cells 10-1, 10-2, 10-3 ... 10-N by selectively removing cells from the string to bring the maximum and minimum cell states of charge closer to the string average state of charge.

In one embodiment, the controller 160 may be operable to detect a drop in the main bus to which the electrochemical cell system 100 is coupled (e.g., if the sun sets or the grid fails and it falls below a threshold voltage, such as 48V). The controller 160 may be coupled to the current source 140 and/or the current sink 150 (e.g., via an analog and/or digital electronic circuit) in order to enable or disable operation thereof. For instance, the controller 160 may enable or disable a DC/DC buck/charger (e.g., the current source 140) and/or a DC/DC boost converter (e.g., a current sink 150). If the main bus drops below a threshold voltage, the controller 160, as described herein, may open the charge string via the charge switching circuitry 101 and close the discharge string via the discharge switching circuitry 102, allowing power to flow from the plurality of cells 10-1, 10-2, 10-3 . . . 10-N through the current sink 150 in the form of a DC/DC boost converter that amplifies the discharge string voltage to support the main bus.

When the bus voltage is supported by solar or an AC charger to a voltage level high enough to charge, the controller 160 may detect this voltage level threshold. In response, the controller 160 may wait until the voltage level is stable above the voltage level threshold, and then open the discharge string via the discharge switching circuitry 102, close the charge string via the charge switching circuitry 101, and enable the current source 140 in the form of DC/DC buck/charger to supply current to the charge string.

In one embodiment, the controller 160 may measure discharge string voltage, and if this string voltage is below a voltage threshold, the controller 160 may send a message to an external device (such as a power conversion system) to connect the main bus to grid power or another power source, if available, to avoid a system shutdown.

In one embodiment, the controller 160 may interface via a communication network, such as a CAN bus, with an air pump (not shown) associated with the electrochemical cell system 100. The air pump may deliver air to the cells 10-1, 10-2, 10-3 . . . 10-N in the respective cell string according to a directive from the controller 160. For instance, the controller 160 may direct the air pump to adjust its speed based on whether the string is charging, discharging, or idle. The controller 160 may determine a speed of the air pump based on cell string air demand, which is related to discharge current. The higher the current, the higher the air demand. The amount needed may be determined by the stoichiometric ratio of the zinc oxidation reaction.

In one embodiment, the controller 160 may communicate with the sensor system 162 via a communication network, such as a CAN bus. The sensor system 162 in one aspect may include a plurality of cell management boards (CMBs) capable of measuring charge and discharge voltages of each cell 10-1, 10-2, 10-3 ... 10-N on which the CMB is provided. Optionally, the CMB may be configured to also manage wiper and pump operation associated with the respective cell 10-1, 10-2, 10-3 . . . 10-N.

The controller 160, as described herein, may also be coupled to an external power source switch (e.g., a grid connect trigger) via a communication network, such as a CAN bus, to control supply of external power to the DC bus.

In one embodiment, as described herein, the controller 160 may be directly wired to the switching circuits 110, 120 of the respective charge and discharge switching circuits 101, 102 to control operation thereof. The switching circuits 110, 120 may be provided in the form of a daisy-chain connection between cells 10-1, 10-2, 10-3 . . . 10-N.

In one embodiment, the controller 160 may be configured to estimate the average state of charge of the string using one or both of two methods: 1) count Amp-hours of charge entering and leaving a string of cells 10-1, 10-2, 10-3 . . . 10-N, with efficiency coefficients, in combination with a time-based self-discharge parameter and 2) count Amp-hours of charge entering and leaving the string of cells 10-1, 10-2, 10-3 . . . 10-N. This state of charge may be communicated via a communication network, such as a CAN bus.

Optionally, the controller 160 may direct operation of the charge switching circuitry 101 and/or the discharge switching circuitry 102 via communication network, such as a CAN bus. For instance, the controller 160 may direct the charge circuitry 101 and/or the discharge switching circuitry 102 to selectively bypass and/or un-bypass one or more cells 10-1, 10-2, 10-3 . . . 10-N.

The controller 160 may operate according to one or more modes of operation including a minimum charge current for wiping mode, a string resistance estimation / high resistance connection detection mode, and a cell control - low voltage bypass mode.

For the minimum charge current for wiping mode, the controller 160 may temporarily disable the charge if available power does not allow for the cell string to be charged above a set current threshold. If the charge current is below the threshold for a set time, the controller 160 may disable the charger for a set time before trying again.

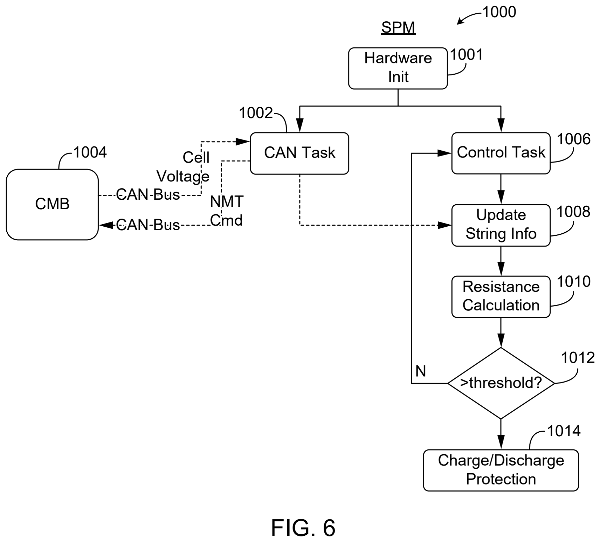

For the string resistance estimation / high resistance connection detection mode, a method of operation is shown in Fig. 6 and generally designated 1000. In the illustrated embodiment, the controller 160 may initialize and monitor individual cell terminal voltages reported and communicated over a CAN bus, and compare the sum of the individual cell terminal voltages with the discharge string voltage. Steps 1001, 1002, 1004, 1006, 1008. The cell voltages are reported from one or more CMBs of a sensor system 162 via a CAN bus-however, the cell voltages can be obtained directly by the controller 160. In combination with a current measurement, the controller 160 may estimate the resistance of all connections within the cell string. Steps 1010, 1012 When the estimated resistance is above a resistance threshold, the controller 160 may disable the cell string as a self-protection mechanism. Step 1014.

In the cell control - low voltage bypass mode, the sensor system 162 (e.g., via one or more CMBs) may measure charge and discharge terminal voltages of each cell 10-1, 10-2, 10-3 . . . 10-N. If the sensor system 162 detects a discharge terminal voltage of a cell 10-1, 10-2, 10-3 . . . 10-N being below its low voltage cutoff (LVC), the controller 160 may command the discharge switching circuitry 102 to bypass the respective cell 10-1, 10-2, 10-3 . . . 10-N.

As described herein, the controller 160 may direct operation of the charge switching circuitry 101 and the discharge switching circuitry 102 based on one or more thresholds associated with a voltage of the main bus, to and from which the electrochemical cell system 100 may be operable to supply and receive power. Below is a table of various thresholds and associated modes of operation of the electrochemical cell system 100 according to one embodiment. It is to be understood that the thresholds and number of modes of operation may vary from application to application.

**Table 1**

| **Main Bus Voltage** | **Controller Mode** | **Current Source** | **Charge SBS** | **Current Sink** | **Discharge Switch** | **Ground Interrupt Switch** |
|---|---|---|---|---|---|---|
| 58 V - Charger target voltage (Charger/buck MPPT full charge power) | Charge | ON | Series | ON | Open | Charge |
| 52.5 V - Minimum voltage while charging (Charger/buck MPPT zero charge power) | Charge | ON | Series | ON | Open | Charge |
| 48 V - Current source shut off | Discharge | OFF | Open | ON | Series | Discharge |
| 47 V - Current sink set point | Discharge | OFF | Open | ON | Series | Discharge |

Maximum power point tracking (MPPT) may be provided where the bus voltage is held by a solar MPPT charger. In a grid-tie application, this is not applicable, so for purposes of discussion, the 58 V and 52.5 V are provided for solar applications only and are not applicable to grid-tie applications. Additionally, it is noted that the voltages and examples provided in Table 1 are provided for discussion purposes as non-limiting examples. The identified voltages are provided as a response to the quality of the voltage regulation for some off-the-shelf solar equipment. In general, the first voltage may be some point higher than the nominal bus voltage (in this case, 48V). The second volage may be a little way down from the first, indicating a voltage that is a bus voltage under which charging the cells is no longer wanted (possibly due to limited bus power). The third voltage may be the nominal bus voltage. The fourth voltage may be a bus voltage just less than the nominal bus voltage. The controller 160 may be configured to charge or discharge in response to the bus voltage. If the bus voltage is greater than the nominal bus voltage, then the controller 160 may switch into a charging mode.

It is noted in the above table and discussion that the terms minimum voltage while charging and current source shut off are used. These are indications of the point where the system may determine to transition from charging to discharging.

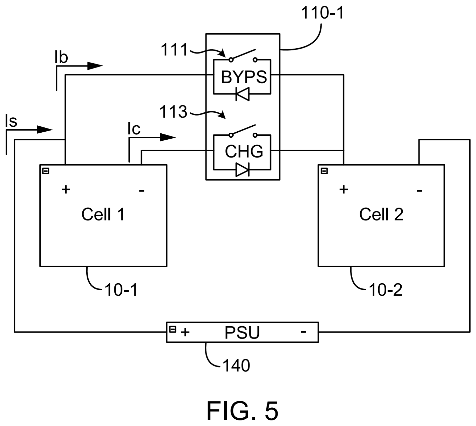

A switching circuit 110-1 according to one embodiment is shown in further detail in Fig. along with first and second cells 10-1, 10-2 for purposes of discussion. It is to be understood that additional cells and/or switching circuits 110 may be present. Further, for purposes of discussion, the discharge terminals and the discharge switching circuitry 102 are absent from the construction shown in Fig. 5. The switching circuit 110-1 in the illustrated embodiment includes a selective bypass switch 111 and a selective charge switch 113, which may be operated as discussed herein to selectively charge or bypass the cell 10-1 for charging the cell 10-1 with current from the current source 140. In one embodiment, the selective bypass switch 111 and the selective charge switch 113 may correspond to MOSFETs (e.g., an Si MOSFET or a GaN MOSFET) including a body diode. The selective bypass switch 111 and the selective charge switch 113 may be single channel MOSFETs with the capability to selectively control flow of current in one direction. Alternatively, the selective bypass switch 111 and the selective charge switch 113 may each be dual channel MOSFETs with the capability to selectively control flow of current in both directions at the cost of additional ON resistance over the single channel construction.

In the illustrated embodiment of Fig. 5, the body diode of the selective charge switch 113 is provided with an anode and cathode that allow current flow from a negative charge terminal of the first cell 10-1 to a positive charge terminal of the second cell 10-1. In other words, the body diode of the selective charge switch 113 may prevent reverse flow of current from the positive charge terminal of the second cell 10-2 to the negative charge terminal of the first cell 10-1. This prevention of reverse flow may prevent unintentional discharge of the first and/or second cells 10-1, 10-2 (e.g., while in a discharge mode). In other words, current flow in may be substantially prevented during a discharge mode through the discharge terminals due to the construction of the first and second cells 10-1, 10-2 and the arrangement of the body diode of the selective charge switch 113. During charge mode, current flow from the anode to the cathode of the body diode of the selective charge switch 113 may be prevented by providing a path of lesser resistance either through selective activation of the selective bypass switch 111 or activation of the selective charge switch 113.

The body diode arrangement for the selective charge switch 113 in Fig. 5 is shown in contrast to the discharge switching circuitry 120 and enables use of a single blocking MOSFET switch for the charge switching circuitry 110 as opposed to back-to-back switches. This effectively halves the MOSFET Rds(on). The depicted configuration may not allow current to flow through the bypass switch during series operation, and may not allow a backwards current loop through the series switch during bypass mode.

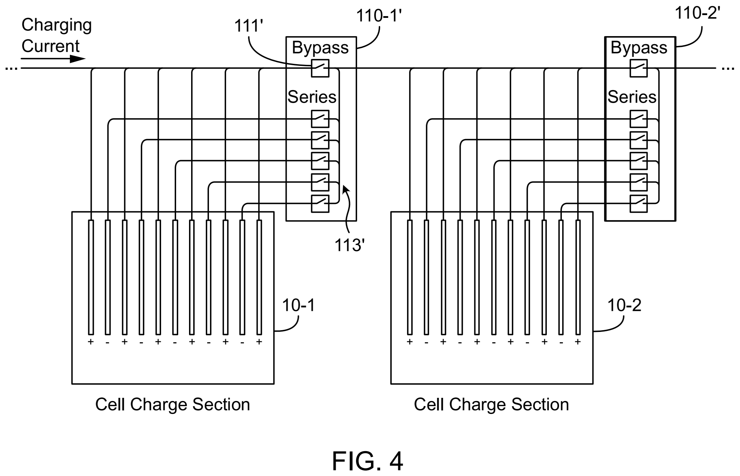

A first switching circuit 110-1' and a second switching circuit 110-2' according to one embodiment are shown in further detail in Fig. 4 along with first and second cells 10-1, 10-2 for purposes of discussion. The first and second switching circuits 110-1', 110-2' may be used in place of the switching circuits 110 of the charge switching circuitry 101. In Fig. 4, each of the first and second cells 10-1, 10-2 is shown in further detail each including a plurality of positive charge terminals, and a plurality of negative charge terminals associated respectively with positive and negative electrodes of the cells. In Fig. 1, for each of the cells 10-1, 10-2, the plurality of positive charge terminals and the plurality of negative charge terminals are connected together to provide the positive and negative charge terminals. However, in Fig. 4, the negative charge terminals of each of the cells 10-1, 10-2 may be separately and respectively connected to one of a plurality of selective charge switches 113' of the first switch 110-1', 110-2'. Control over activation/deactivation of the selective charge switches 113' may enable selective charging of one or more electrodes of the cells 10-1, 10-2 via directing current from the current source 140 through a selected pair (or pairs) of negative and positive electrodes of the cells 10-1, 10-2. The first and second switching circuits 110-1', 110-2' may include a selective bypass switch 111' similar to the selective bypass switch 111 and can be activated to bypass one of the cells 10-1, 10-2 to avoid charging of the bypassed cell 10-1, 10-2.

Turning to Fig. 2, an electrochemical cell system according to one embodiment is shown and generally designated 200. The electrochemical cell system 200 is similar to the electrochemical cell system 100 in several ways but different in others. For instance, the electrochemical cell system 200 includes a plurality of cells 10-1, 10-2, 10-3 constructed in the same manner as those discussed herein in conjunction with the electrochemical cell system 100. Likewise, the electrochemical cell system 200 includes a current source 140 and a current sink 150 that are constructed in the same manner as the electrochemical cell system 100.

In the illustrated embodiment, the electrochemical cell system 200 includes charge switching circuitry 201 and discharge switching circuitry 202 that may be operable coupled to a controller 260, which may be similar to the controller 160 and able to direct operation of the charge switching circuitry 201 and the discharge switching circuitry 202 according to one or more aspects described herein. For instance, similar to the controller 160, the controller 260 may direct operation of the charge switching circuitry 201 and the discharge switching circuitry 202 such that simultaneous charging of the plurality of cells 10-1, 10-2 . . . 10-N is prevented.

In one aspect, the charge switching circuitry 201 may be operably coupled to the positive charge terminal and the negative charge terminal of the plurality of cells 10-1, 10-2 . . . 10-N to selectively control charging of one or more of the plurality of cells 10-1, 10-2 . . . 10-N, while the discharge switching circuitry 202 may be operatively coupled to the negative charge terminal and the negative discharge terminal of the plurality of cells 10-1, 10-2 . . . 10-N to selectively control discharging of one or more of the plurality of cells 10-1, 10-2 . . . 10-N.

The charge switching circuitry 201 according to one embodiment may include a plurality of switching circuits 210-1, 210-2 . . . 210-N. The switching circuits 210-1, 210-2 ... 210-N may be selectively controlled by the controller 260 to selectively charge one or more of the plurality of cells 10-1, 10-2 . . . 10-N. In one embodiment, charging of the cells 10-1, 10-2 . . . 10-N can be conducted according to a characteristic of each of the cells 10-1, 10-2 . . . 10-N, such as a state of charge of a cell 10-1, 10-2 . . . 10-N. For instance, one or more of the cells 10-1, 10-2 . . . 10-N may be selectively bypassed relative to the charging current provided from the current source 140 based on the characteristic.

Bypass of a cell 10-1, 10-2, 10-3 . . . 10-N in the electrochemical cell system 200 may be achieved in a different manner from the electrochemical cell system 100. For instance, in the illustrated embodiment of Fig. 2, the cell 10-1 may be selectively bypassed by the switching circuit 210-1, which may be operably coupled to the positive charge terminal of the cell 10-1 and the negative charge terminal of the cell 10-1. Similar to the switch 110-1, the switching circuit 210-1 may be selectively controlled to direct current from the current source 140 through the cell 10-1 or so that such current bypasses the cell 10-1. To direct current from the current source 140 through the cell 10-1, the switching circuit 210-1 may be controlled to provide a current path for the current from the current source 140 to flow from the positive charge terminal to the negative charge terminal. To bypass the cell 10-1, the switching circuit 210-1 may be controlled so that another current path is provided for current to flow with a substantially lower potential for current. For instance, a selectable bypass switch of the switching circuit 210-1 may be activated to bypass the positive charge terminal of the cell 10-1 and direct current from the current source 140 to a downstream connection, such as another switching circuit 210 of the charge switching circuitry 201. Bypass of the positive charge terminal of the cell 10-1 may be provided by directing current from the current source 140 to the negative charge terminal of the cell 10-1 so that such current does not flow between the positive and negative charge terminals of the cell 10-1.

To provide current between the positive charge terminal and the negative charge terminal of the cell 10-1, a selective charge switch of the switching circuit 210-1 may be activated, while the selectable bypass switch is deactivated, to provide a current path from the positive charge terminal to the negative charge terminal and then to the downstream connection, such as another switching circuit 210 of the charge switching circuitry 201. Charge and charge bypass modes for each of the plurality of cells 10-1, 10-2 . . . 10-N may be selectively controlled by the charge switching circuitry 101 in a similar manner, with a respective switching circuit 210-1, 210-2 . . . 210-N being controllable to selectively charge or bypass an associated cell 10-1, 10-2, 10-3 . . . 10-N.

The discharge switching circuitry 202 in one embodiment may include a plurality of switching circuits 220-1, 220-2 . . . 120-N. The switching circuits 220-1, 220-2 ... 120-N may be selectively controlled by the controller 260 to selectively discharge one or more of the plurality of cells 10-1, 10-2 . . . 10-N. In one embodiment, discharging of the cells 10-1, 10-2 . . . 10-N can be conducted according to a characteristic of each of the cells 10-1, 10-2, 10-3 . . . 10-N, such as a state of charge of a cell 10-1, 10-2, 10-3 . . . 10-N.

For instance, one or more of the cells 10-1, 10-2 . . . 10-N may be selectively bypassed relative to discharging current provided toward the current sink 150 based on the characteristic. Similar to control over the plurality of switching circuits 210-1, 210-2 . . . 210-N of the charge switching circuitry 201, the controller 260 may direct operation of the plurality of switching circuits 220-1, 220-2 . . . 120-N of the discharge switching circuitry 202 based on sensor output from the sensor system 162, such as a state of charge.

Bypass of a cell 10-1, 10-2 . . . 10-N for discharging may be achieved in a variety of ways as described herein. In the illustrated embodiment of Fig. 2, the cell 10-1 may be selectively bypassed by the switching circuit 220-1, which may be operably coupled to the positive discharge terminal of the cell 10-1 and the negative discharge terminal of the cell 10-1. The switching circuit 220-1 may be selectively controlled to direct current from the cell 10-1 to the current sink 150 or so that a current path between the positive and negative discharge terminals is effectively bypassed for the cell 10-1. To direct current to the current sink 150 from the cell 10-1, the switching circuit 220-1 may be controlled to provide a current path for current generated from the cell 10-1 relative to the positive and negative discharge terminals for supply to the current sink 150. To bypass the cell 10-1, the switching circuit 220-1 may be controlled so that another current path is provided for current to flow with a substantially lower potential for current. For instance, a selectable bypass switch of the switching circuit 220-1 may be activated to provide a current path between the negative discharge terminal of the cell 10-1 and an upstream connection, such as the negative discharge terminal of a downstream cell or the current sink 150. To obtain current between the positive charge terminal and the negative charge terminal of the cell 10-1, a selective discharge switch of the switching circuit 120-1 may be activated, while the selectable bypass switch is deactivated, to provide a current discharge path between the positive discharge terminal to the negative discharge terminal and then to a downstream connection, such as another cell 10-1, 10-2 . . . 10-N or the current sink 150. Discharge and discharge bypass modes for each of the plurality of cells 10-1, 10-2 . . . 10-N may be selectively controlled by the discharge switching circuitry 101 in a similar manner, with a respective switching circuit 220-1, 220-2 . . . 220-N being controllable to selectively discharge or bypass an associated cell 10-1, 10-2 . . . 10-N.

A sensor system 262 may be provided in the electrochemical cell system 200, similar to the sensor system 162 and the electrochemical cell system 100, that is coupled to the one or more components thereof, such as the charge switching circuitry 201, and operable to provide sensor output indicative of a characteristic (or characteristics) pertaining to each of the plurality of cells 10-1, 10-2 . . . 10-N. For instance, the characteristic may correspond to a state of charge of a particular cell among the plurality of cells 10-1, 10-2 . . . 10-N. The sensor system 262 may obtain such sensor output for each of the plurality of cells 10-1, 10-2 . . . 10-N, and provide this sensor output to the controller 160 which may in turn, based on the senor output, selectively determine which of the plurality of cells 10-1, 10-2 . . . 10-N to charge with current from the current source 140. The controller 160, additionally, or alternatively, may selectively determine based on the sensor output which of the plurality of cells 10-1, 10-2 . . . 10-N to discharge into the current sink 150.

In the illustrated embodiment, the electrochemical cell system 200 includes a selector switch 230 operable to selectively couple the charge switching circuitry 201 or the discharge switching circuitry 202 to ground and a respective one of the current source 140 and the current sink 150, depending on the mode of operation (i.e., charge mode or discharge mode). The selector switch 230 may correspond to a ground interrupt switch used in a "positive switching" configuration, depicted in Fig. 2, because the two negative terminals are at different potentials. If the two negative terminals of the cell 10-N are not isolated from the main bus, then there will be current flowing between the two.

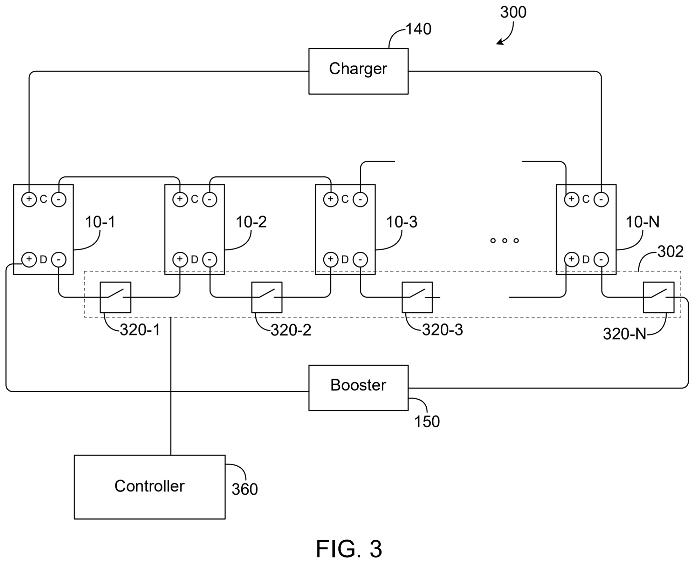

An alternative embodiment of an electrochemical cell system is shown in Fig. 3 and generally designated 300. The electrochemical cell system 300 is similar to the electrochemical cell system 100 in several ways but different in others. For instance, the electrochemical cell system 300 includes a plurality of cells 10-1, 10-2, 10-3 . . . 10-N constructed in the same manner as those discussed herein in conjunction with the electrochemical cell system 100. Likewise, the electrochemical cell system 200 includes a current source 140 and a current sink 150 that are constructed in the same manner as the electrochemical cell system 100. The electrochemical cell system 300 may include a sensor system (not shown) that is similar to the sensor system 162 described herein.

Unlike the electrochemical cell system 100, the electrochemical cell system 300 controls charge and discharge modes of the system via discharge switching circuitry 302 (e.g., without charge switching circuitry). A controller 360 of the electrochemical cell system 300, similar to the controller 160, may be provided to control charging and discharging of the electrochemical cell system 300. The positive and negative charge terminals of the plurality of cells 10-1, 10-2, 10-3 . . . 10-N may be connected to enable charging of all of the cells via current from the current source 140. During a charge mode in which the current source 140 is suppling current to the plurality of cells 10-1, 10-2, 10-3 . . . 10-N, the discharge switching circuitry 302 may be directed to deactivate a plurality of switching circuits 302-1, 320-2, 320-3 . . . 320-N by a controller 360 to disconnect the discharge path for each of the plurality of cells 10-1, 10-2, 10-3 . . . 10-N to prevent simultaneous charging and discharging of the plurality of cells 10-1, 10-2, 10-3 . . . 10-N. In a discharge mode, the plurality of switching circuits 320-1, 320-2, 320-3 ... 320-N of the discharge switching circuitry 302 may be activated by the controller 360 to provide a circuit path through the positive and negative discharge terminals of the plurality of cells 10-1, 10-2, 10-3 . . . 10-N and the current sink 150.

Operation of the electrochemical system 300 may be similar to the electrochemical system 100 except operation of charge switching circuitry. Instead, as discussed, the discharge switching circuitry 302 may be configured and controlled so that discharge and charge sections or strings are not connected at the same time and so that an unwanted side reaction of one or more cells can be avoided.

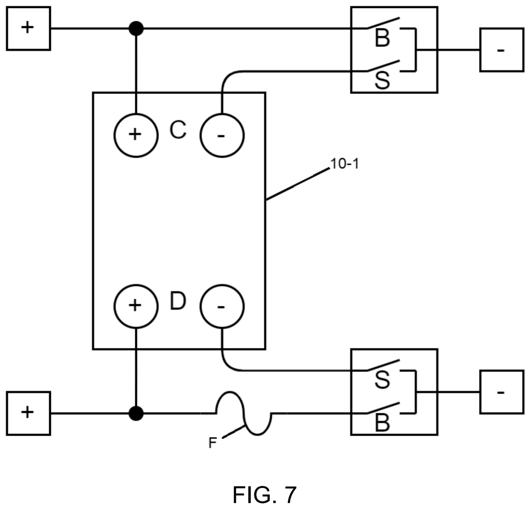

MOSFETs tend to fail open when not powered, which is safer. However, there are scenarios where the SSS board would fail closed, thus the board could have an uncontrolled discharge and catch fire. Further, a controls logic error causing an erroneous relay command can cause this problem. While a thorough code review can catch logic errors that can cause this problem, an electrical failure caused by any reason can also cause this problem, which is potentially undetectable. To prevent uncontrolled discharge, one of the switching sides needs to fail normally open and/or an integrated fuse can be provided that prevents an overcurrent scenario. As seen in Fig. 7, the electrochemical cell system may be equipped with a fuse F (e.g., a 60 A fuse) between the positive terminal and the bypass switch in line with the bypass switch. The fuse F may be added to the board or in-line with the board on the bypass side. The fuse F can go into the board, on a cable or other locations. The fuse F can be added in-line with the wire on each branch of the air cathode connecting to the bus bar that attaches to the CMB. The location of the fuse F on the bypass side is preferred, though not necessary, because there are resistive losses through the fuse F and the bypass switch is used less often so the discharge current is not flowing through the fuse F all the time and incurring the resistive losses. The fuse F is preferably a fast-acting fuse. Preferably, the voltage the fuse F needs to interrupt is less than 1.5 V. One signal that the fuse F has tripped is that the cell's discharge voltage is not measurable, which should signal an alert that the cell must be replaced.

Directional terms, such as "vertical," "horizontal," "top," "bottom," "upper," "lower," "inner," "inwardly," "outer" and "outwardly," are used to assist in describing the invention based on the orientation of the embodiments shown in the illustrations. The use of directional terms should not be interpreted to limit the invention to any specific orientation(s).

The above description is that of current embodiments of the invention. Various alterations and changes can be made without departing from the spirit and broader aspects of the invention as defined in the appended claims, which are to be interpreted in accordance with the principles of patent law including the doctrine of equivalents. This disclosure is presented for illustrative purposes and should not be interpreted as an exhaustive description of all embodiments of the invention or to limit the scope of the claims to the specific elements illustrated or described in connection with these embodiments. For example, and without limitation, any individual element(s) of the described invention may be replaced by alternative elements that provide substantially similar functionality or otherwise provide adequate operation. This includes, for example, presently known alternative elements, such as those that might be currently known to one skilled in the art, and alternative elements that may be developed in the future, such as those that one skilled in the art might, upon development, recognize as an alternative. Further, the disclosed embodiments include a plurality of features that are described in concert and that might cooperatively provide a collection of benefits. The present invention is not limited to only those embodiments that include all of these features or that provide all of the stated benefits, except to the extent otherwise expressly set forth in the issued claims. Any reference to claim elements in the singular, for example, using the articles "a," "an," "the" or "said," is not to be construed as limiting the element to the singular.

## Claims

1. An electrochemical cell system, said system comprising:
first and second cells, the first and second cells each including a negative charge terminal and a positive charge terminal and a1 negative discharge terminal and a positive discharge terminal, the electrochemical cell system adapted to discharge power to a current sink and to charge based on power from a current source;
first discharge switching circuitry operably coupled to the positive discharge terminal of the first cell, the first discharge switching circuitry operable to selectively provide current to the current sink from the first cell;
second discharge switching circuitry operably coupled to the positive discharge terminal of the second cell and the negative discharge terminal of the first cell, the second discharge switching circuitry operable to selectively provide current to the current sink from the second cell; and
a controller configured to direct operation of the first and second discharge switching circuitry to substantially isolate charging and discharging of the first and second cells.

2. The electrochemical cell system of claim 1, comprising:
first charge switching circuitry operably coupled to the positive charge terminal of the first cell, the first charge switching circuitry operable to selectively provide current output from the current source to the positive charge terminal of the first cell; and
second charge switching circuitry operably coupled to the positive charge terminal of the second cell, the second charge switching circuitry operable to selectively provide the current output from the current source to the positive charge terminal of the second cell, wherein the second charge switching circuitry receives the current output from the current source via at least one of the first cell and the first charge switching circuitry.

3. The electrochemical cell system of claim 2, wherein receipt of current output from the first cell in the second charge switching circuitry includes receiving the current output from the current source via the negative charge terminal of the first cell, and wherein receipt of current output from the first charge switching circuitry includes receiving the current output from the current source via at least one of a direct connection to the first charge switching circuitry and an indirect connection to the first charge switching circuitry at the positive charge terminal of the first cell.

4. The electrochemical cell system of claim 2, wherein at least one of the first charge switching circuitry and the second charge switching circuitry is operable to selectively bypass current flow into the positive charge terminal of the first cell to provide current from the current source to the second charge switching circuitry.

5. The electrochemical cell system of claim 4, wherein:
first charge switching circuitry selectively bypasses current flow into the positive charge terminal of the first cell by directing current to a node of the first cell that is connected to the negative charge terminal of the first cell and the second charge switching circuitry; or,
second charge switching circuitry selectively bypasses current flow into the positive charge terminal of the first cell by disconnecting from the negative charge terminal of the first cell and connecting to the positive charge terminal of the first cell.

6. The electrochemical cell system of claim 2, wherein the controller is operable to selectively discharge power from one or both of the first and second cells, and wherein the controller is operable to selectively charge one or both of the first and second cells.

7. The electrochemical cell system of claim 6, wherein the controller is operable to control whether one or both of the first and second cells is being:
discharged by selectively bypassing the first and second cells via operation of the first and second discharge switching circuitry; or,
charged by selectively bypassing the first and second cells via operation of the first and second charge switching circuitry.

8. The electrochemical cell system of any one of claims 1 to 7, wherein the first discharge switching circuitry is operable to selectively provide current to the current sink from the first cell via the positive discharge terminal of the first cell, and wherein the second discharge switching circuitry operable to selectively provide current to the current sink from the second cell via the positive discharge terminal of the second cell.

9. The electrochemical cell system of any one of claims 1 to 8, wherein:
(a) the current sink is a boost converter operable to convert power from the electrochemical cell system to power an external load;
(b) the current source is a buck converter operable to convert external power for charging the electrochemical system; or,
(c) both (a) and (b).

10. The electrochemical cell system of claim 1, wherein:
(a) the first discharge switching circuitry is operable to selectively bypass current flow from the positive discharge terminal of the first cell by coupling the negative discharge terminal of the first cell to the current sink instead of the positive discharge terminal of the first cell; or,
(b) the second discharge switching circuitry is operable to selectively bypass current flow from the positive discharge terminal of the first cell by disconnecting the negative discharge terminal of the first cell.

11. The electrochemical cell system of claim 2, wherein the first charge switching circuitry includes a first single-sided MOSFET with a first body diode configured to substantially block current flow from the positive charge terminal of the second cell to the negative charge terminal of the first cell.

12. The electrochemical cell system of claim 11, wherein a sensor is coupled to the first single sided MOSFET to provide an output that confirms the first single sided MOSFET is operational to avoid conduction through the first body diode while charging the first cell.

13. The electrochemical cell system of claim 11 or claim 12, wherein:
(a) a construction of the first and second cells substantially limits current flow through the first body diode from the negative charge terminal of the first cell to the positive charge terminal of the second cell;
(b) the first charge switching circuitry includes a second single sided MOSFET configured to selectively bypass the charging of the first cell;
(c) in the first charge switching circuitry includes a first double sided MOSFET operable to selectively control charging of the first cell; or,
(d) any combination of (a), (b) and (c).

14. Switching circuitry for an electrochemical cell system including first and second cells, the first and second cells each including a negative charge terminal and a positive charge terminal and a negative discharge terminal and a positive discharge terminal, the electrochemical cell system adapted to discharge power to a current sink and to charge based on power from a current source, the switching circuitry comprising:
a first MOSFET including a first body diode, the first MOSFET connected between the negative charge terminal of the first cell and the positive charge terminal of the second cell, the first MOSFET being operable to selectively control charging of the first cell based on power from the current source, the first body diode of the first MOSFET is configured to substantially block current flow from the positive charge terminal of the second cell to the negative charge terminal of the first cell; and
a second MOSFET connected between the positive charge terminal of the first cell and the positive charge terminal of the second cell, the second MOSFET being operable to selectively bypass charging of the first cell.

15. The switching circuitry of claim 14, wherein:
(a) a sensor is coupled to the first MOSFET to provide an output that confirms the first MOSFET is operational to avoid conduction through the first body diode while charging the first cell;
(b) a construction of the first and second cells substantially limits current flow through the first body diode from the negative charge terminal of the first cell to the positive charge terminal of the second cell; or,
(c) both (a) and (b).
